# EUROPEAN PATENT SPECIFICATION

(11) **EP 3 819 152 B1**
(45) Date of publication and mention of the grant of the patent: **29.06.2022**
(21) Application number: 20203674.5
(22) Date of filing: 23.10.2020
(51) Int. Cl.: B60K 15/04, B67D 7/14, B67D 7/34

(54) **SYSTEM TO CONTROL THE DELIVERY OF FUEL FROM A DISPENSER DEVICE, IN PARTICULAR A FILLING STATION, TO A STORAGE CONTAINER, IN PARTICULAR A TANK OF A VEHICLE**
SYSTEM ZUR STEUERUNG DER ABGABE VON KRAFTSTOFF AUS EINER ABGABEVORRICHTUNG, INSBESONDERE EINER TANKSTELLE, AN EINEN VORRATSBEHÄLTER, INSBESONDERE EINEN TANK EINES FAHRZEUGS
SYSTÈME DE COMMANDE DE LA DISTRIBUTION DE CARBURANT D'UN DISPOSITIF DE DISTRIBUTION, NOTAMMENT D'UNE STATION-SERVICE, À UN RÉSERVOIR DE STOCKAGE, NOTAMMENT LE RÉSERVOIR D'UN VÉHICULE

(30) Priority: 25.10.2019 IT 201900019792
(43) Date of publication of application: 12.05.2021
(73) Proprietor: Pretini, Enrico, 62019 Recanati (MC) (IT)
(72) Inventor: Pretini, Enrico, 62019 Recanati (MC) (IT)
(74) Representative: Manconi, Stefano

(56) References cited:
- EP-A1- 2 778 116
- WO-A1-2005/025914
- CN-B- 105 857 060
- DE-A1-102010 008 206
- IT-A1- PD20 090 299

## Description

### CROSS-REFERENCE TO RELATED APPLICATIONS

This patent application claims priority from Italian patent application no. 102019000019792 filed on 25/10/2019.

### TECHNICAL FIELD

The present invention relates to a system for controlling the delivery of fuel from a dispenser device, in particular a filling station, to a storage container, in particular a tank of a vehicle.

The present invention has particularly advantageous application in a system for controlling the delivery of fuel from a filling station to a tank of a vehicle, to which the following discussion will refer explicitly without thereby losing its generality.

### BACKGROUND ART

In the field of the delivery of fuel from a filling station to a tank of a vehicle, it is known to have a control system comprising an antenna mounted on a mouth of the tank; an RFID tag mounted on a delivering member of the filling station; an RFID reader connected to the antenna and configured to detect the presence of the RFID tag through the antenna; and a control unit associated with the filling station and configured to enable the delivery of fuel from the delivering member to the tank when the antenna detects the presence of the RFID tag.

The known systems of the type described above for controlling the delivery of fuel from a filling station to a tank of a vehicle have some drawbacks mainly deriving from the fact that, once removed the closing cap of the mouth of the tank, the assembly defined by the RFID tag and by the antenna is incapable of ensuring that only the delivering member is inserted inside the tank and not also a pipe for the fraudulent removal of fuel simultaneously to the filling operation being conducted by means of the delivering member. CN 105 857 060 B discloses a system to control the delivery of fuel according to the preamble of claim 1.

### DISCLOSURE OF INVENTION

The object of the present invention is to provide a system for controlling the delivery of fuel from a dispenser device, in particular a filling station, to a storage container, in particular a tank of a vehicle, which is free from the drawbacks described above and which is simple and cost-effective to implement.

According to the present invention, a system for controlling the delivery of fuel from a dispenser device, in particular a filling station, to a storage container, in particular a tank of a vehicle is provided, as claimed in the appended claims.

### BRIEF DESCRIPTION OF THE DRAWINGS

The present invention will now be described with reference to the accompanying drawings, which illustrate a non-limiting embodiment example thereof, wherein:
Figure 1 shows a schematic lateral view, with parts in section and parts removed for clarity, of a preferred embodiment of the control system of the present invention;
Figures 2 and 3 show two perspective views of a detail of the control system of Figure 1 illustrated in two different operating positions; and
Figure 4 shows a schematic lateral view, with parts in section and parts removed for clarity, of a variant of the control system of Figure 1.

### BEST MODE FOR CARRYING OUT THE INVENTION

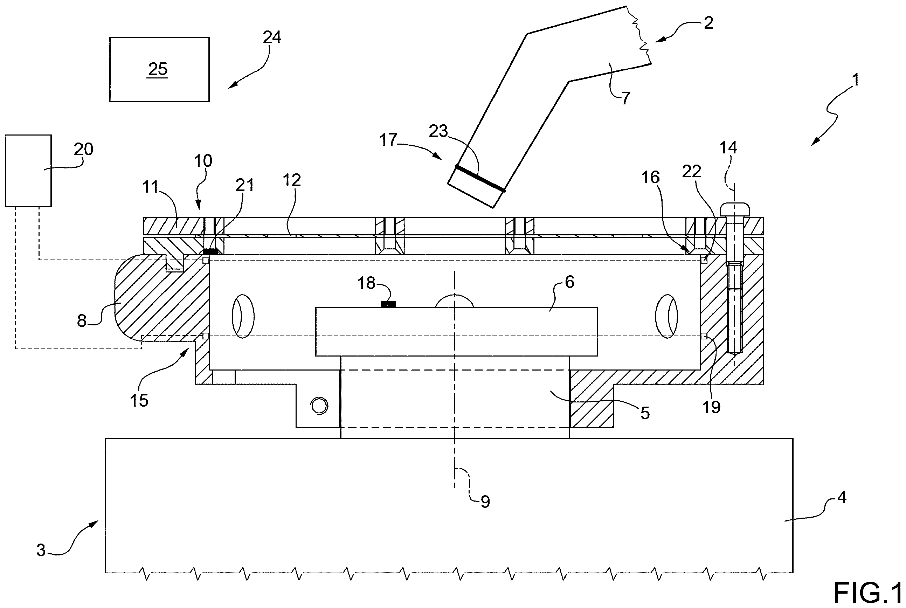

With reference to Figures 1, 2, and 3, reference numeral 1 indicates, as a whole, a system for controlling the delivery of fuel from a filling station 2 to a tank 3 of a vehicle (not illustrated).

The tank 3 comprises a container 4 provided with a feeding mouth 5, and a closing cap 6 mounted on the mouth 5 for closing the container 4.

The station 2 comprises at least one filling pump (not illustrated) provided with a delivering member 7.

The control system 1 comprises a sleeve 8, which is designed to be attached to the container 4, is fitted around the mouth 5, has a longitudinal axis 9, and protrudes axially from the cap 6.

The control system 1 further has a guide disc 10 comprising a ring-shaped support plate 11 provided with an inner membrane 12, which is attached to the inside of the plate 11, is made of an elastically deformable material, and has a central hole 13.

The hole 13 is designed to be engaged by the member 7, and has a diameter, which is smaller than a diameter of the cap 6, and approximates by excess the diameter of the member 7.

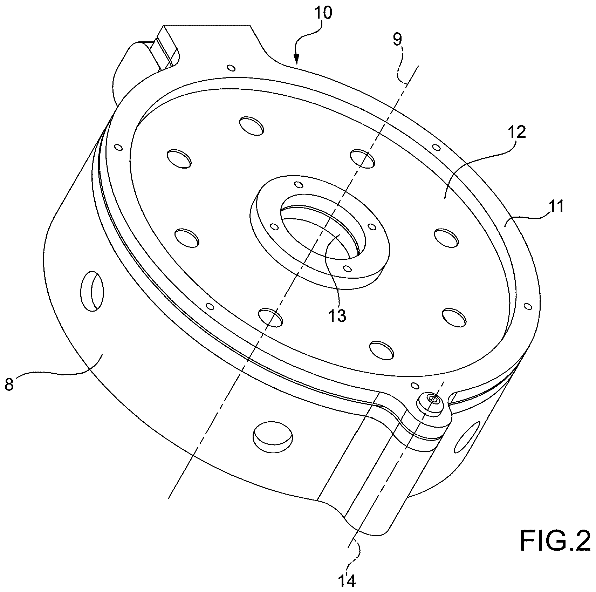

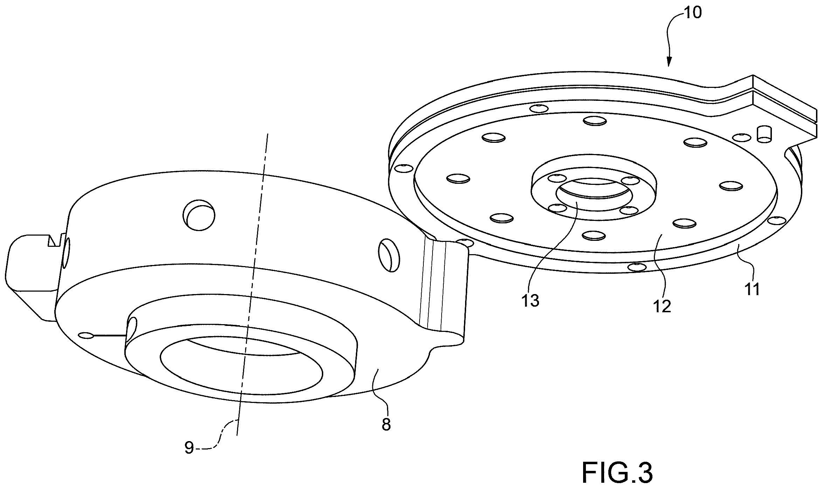

The plate 11 is hinged to the sleeve 8 so as to rotate, with respect to the sleeve 8, around a fulcrum axis 14 parallel to the axis 9 between a first position (Figures 1 and 2), in which the hole 13 is arranged coaxially to the axis 9 so as to allow the member 7 to feed fuel into the container 4 through the mouth 5, and a second position (Figure 3), in which the disc 10 is arranged so as to allow the removal of the cap 6 from the mouth 5 and the application of the cap 6 on the mouth 5.

The control system 1 further comprises a first detection device 15 for detecting whether the cap 6 is present or not on the mouth 5; a second detection device 16 for detecting whether the disc 10 is arranged in its first position; and a third detection device 17 for detecting whether the member 7 engages or disengages the mouth 5.

The device 15 comprises, in this case, an RFID tag 18 mounted on the cap 6, a ring-shaped antenna 19 mounted on an inner surface of the sleeve 8 coaxially to axis 9, and an RFID reader 20 connected to the antenna 19 and configured to detect the presence of the RFID tag 18 through the antenna 19.

The device 16 comprises, in this case, an RFID tag 21 mounted on the disc 10, a ring-shaped antenna 22 mounted on the inner surface of the sleeve 8 coaxially to the axis 9, and the RFID reader 20, which is connected to the antenna 22, and is configured to detect the presence of the RFID tag 21 through the antenna 22.

The device 17 comprises, in this case, an RFID tag 23 mounted on the member 7 and the RFID reader 20, which is configured to detect the presence of the RFID tag 23 through the antenna 19 in order to detect when the member 7 engages the mouth 5 and through the antenna 22 in order to detect when the member 7 disengages the mouth 5.

The control system 1 is further provided with a control device 24, which communicates with the RFID reader 20, and is configured to enable the delivery of fuel from the member 7 to the tank 3 when the device 15 detects that the cap 6 is not present on the mouth 5, the device 16 detects that the disc 10 is arranged in the first position, and the device 17 detects that the member 7 engages the mouth 5.

The control device 24 is further configured to enable the delivery of fuel from the member 7 to the tank 3 when the amount of time elapsing between the detection of the RFID tag 21 through the antenna 22 and the detection of the RFID tag 23 through the antenna 19 is equal, at the most, to a given first threshold value.

In other words, the device 24 enables the delivery of fuel at the beginning of the filling only when the user, once moved the disc 10 from the second position into the first position, inserts the member 7 in the mouth 5 within a given amount of time.

The control device 24 is further configured to enable the delivery of fuel from the member 7 to the tank 3 when the amount of time elapsing between the detection of the RFID tag 23 through the antenna 22 and the detection of the RFID tag 23 through the antenna 19 is equal, at the most, to a given second threshold value.

In other words, the device 24 does not interrupt the delivery of fuel during the filling only when the user, once extracted the member 7 from the mouth 5, reinserts the member 7 in the mouth 5 within a given amount of time.

Once carried out the delivery of fuel and extracted the member 7 from the mouth 5, the disc 10 must be moved back into its second position and the cap 6 must be reapplied on the mouth 5 within a relatively reduced amount of time so as to prevent the access to the tank 3 and the fraudulent removal of fuel from the tank 3.

With regard to what presented above, it should be specified that the control device 24 comprises a control unit 25 associated with the station 2, first wireless communication means (not illustrated) connected to the RFID reader 20, and second wireless communication means (not illustrated) connected to the control unit 25 and designed to communicate with the first wireless communication means (not illustrated).

The control system 1 has some advantages mainly deriving from the fact that the diameter of the central hole 13 of the guide disc 10 allows inserting in the mouth 5 only the member 7 preventing the insertion of further pipes and that the detection devices 15, 16, 17 ensure the insertion in the mouth 5 only of the member 7 and not of pipes different from the member 7.

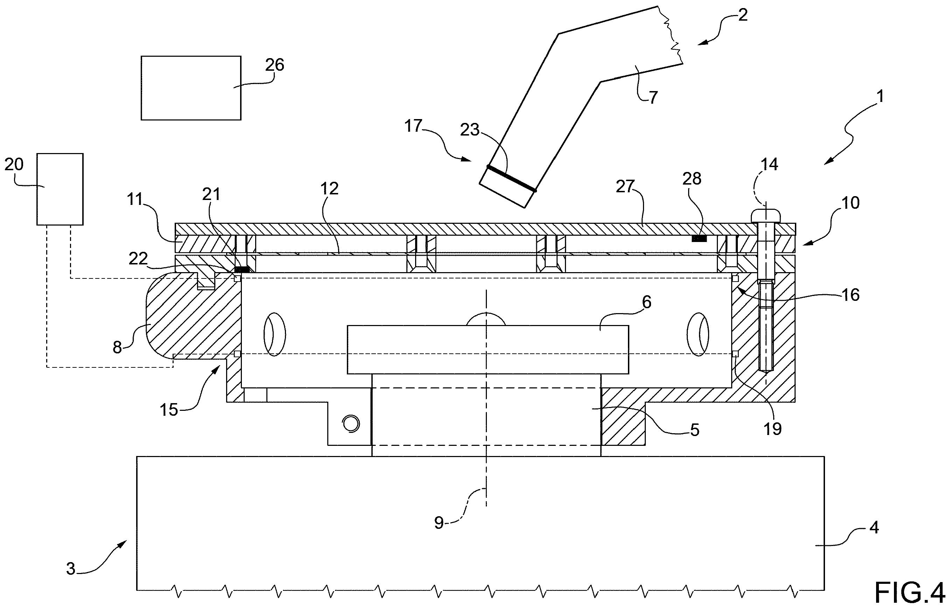

The variant illustrated in Figure 4 differs from what illustrated in the previous figures for the fact that, therein:
the tag 18 of the cap 6 is eliminated;
the control device 24 is eliminated and replaced with a control device 26; and
on top the disc 10 a circular plate 27 is mounted.

The plate 27 is mounted so as to rotate around the axis 14 between a closed position (Figure 4), in which the plate 27 is arranged coaxially to the axis 9 so as to prevent the access to the tank 3, and an open position (not illustrated), in which the plate 27 is arranged so as to allow the access to the tank 3.

The plate 27 is provided with a tag 28, the presence thereof is detected through the antenna 22.

The control device 26 communicates with the RFID reader 20, and is configured to enable the delivery of fuel from the member 7 to the tank 3 when the device 16 detects that the disc 10 is arranged in the first position, the device 17 detects that the member 7 engages the mouth 5, and the antenna 22 detects that the plate 27 is arranged in its open position.

Once carried out the delivery of fuel and extracted the member 7 from the mouth 5, the plate 27 must be moved back into its closed position within a relatively reduced amount of time so as to prevent the access to the tank 3 and the fraudulent removal of fuel from the tank 3.

According to a variant not illustrated, the membrane 12 of the disc 10 is eliminated and replaced with a substantially truncated cone-shaped membrane made of elastically deformable material and provided with coupling means, for example magnets, to the member 7.

## Claims

1. A system to control the delivery of fuel from a dispenser device (2), in particular a filling station, to a storage container (3), in particular a tank of a vehicle, **characterised in that** the control system comprises a sleeve (8) designed to be fitted around a closing cap (6) of a mouth (5) of the storage container (3); a guide disc (10), which has a central hole (13) able to be engaged by a delivering member (7) of the dispenser device (2), and is coupled to the sleeve (8) so as to move between a first position, in which the guide disc (10) allows the delivering member (7) to feed fuel into the storage container (3) through the mouth (5), and a second position, in which the closing cap (6) is removable from the mouth (5); first detection means (16) to detect whether the guide disc (10) is arranged in its first position; second detection means (17) to detect whether the delivering member (7) engages or disengages the mouth (5); and control means (24) configured to enable the delivery of fuel from the dispenser device (2) to the storage container (3) when the first detection means (16) detect that the guide disc (10) is arranged in the first position and the second detection means (17) detect that the delivering member (7) engages the mouth (5).

2. A control system according to claim 1, wherein the first detection means (16) comprise a first RFID tag (21) mounted on the guide disc (10), a first antenna (22) mounted on the sleeve (8), and an RFID reader (20), which is connected to the first antenna (22), and is configured to detect the presence of the first RFID tag (21) through the first antenna (22) and to communicate with the control means (24).

3. A control system according to claim 2, wherein the second detection means (17) comprise a second RFID tag (23) mounted on the delivering member (7), a second antenna (19) mounted on the sleeve (8), and said RFID reader (20), which is configured to detect the presence of the second RFID tag (23) through the second antenna (19) in order to detect when the delivering member (7) engages the mouth (5).

4. A control system according to claim 3, wherein the control means (24) are configured to enable the delivery of fuel from the dispenser device (2) to the storage container (3) when the amount of time elapsing between the detection of the first RFID tag (21) through the first antenna (22) and the detection of the second RFID tag (23) through the second antenna (19) is equal, at the most, to a given first threshold value.

5. A control system according to claim 2, wherein the second detection means (17) comprise a second RFID tag (23) mounted on the delivering member (7), a second antenna (19) mounted on the sleeve (8), and said RFID reader (20), which is configured to detect the presence of the second RFID tag (23) through the first antenna (22) in order to detect when the delivering member (7) disengages the mouth (5).

6. A control system according to claim 5, wherein the control means (24) are configured to enable the delivery of fuel from the dispenser device (2) to the storage container (3) when the amount of time elapsing between the detection of the second RFID tag (23) through the first antenna (22) and the detection of the second RFID tag (23) through the second antenna (19) is equal, at the most, to a given second threshold value.

7. A control system according to any one of the claims from 3 to 6 and further comprising third detection means (15) to detect whether the closing cap (6) is present or not on the mouth (5).

8. A control system according to claim 7, wherein the control means (24) are configured to enable the delivery of fuel from the dispenser device (2) to the storage container (3) when the third detection means (15) detect that the closing cap (6) is not present on the mouth (5).

9. A control system according to claim 7 or 8, wherein the third detection means (15) comprise a third RFID tag (18) mounted on the closing cap (6) and said RFID reader (20), which is configured to detect the presence of the third RFID tag (18) through the second antenna (19) in order to detect when the closing cap (6) is present on the mouth (5).

10. A control system according to any one of the claims from 3 to 6 and further comprising a closing plate (27); the guide disc (10) being mounted between the sleeve (8) and the closing plate (27).

11. A control system according to claim 10, wherein the closing plate (27) is movable between a closed position, in which the closing plate (27) forbids access to the guide disc (10) and, hence, to the storage container (3), and an open position, in which the closing plate (27) allows access to the guide disc (10) and, hence, to the storage container (3).

12. A control system according to claim 11 and further comprising a fourth RFID tag (28) mounted on the closing plate (27); the RFID reader (20) being configured to detect the presence of the fourth RFID tag (28) through the first antenna (22) in order to detect when the closing plate (27) is arranged in its closed position or in its open position.

13. A control system according to any one of the claims from 2 to 12, wherein the control means (24) comprise a control unit (25) associated with the dispenser device (2), first wireless communication means connected to the RFID reader (20), and second wireless communication means connected to the control unit (25) and designed to communicate with the first wireless communication means.

14. A control system according to any one of the preceding claims, wherein the guide disc (10) comprises an elastically deformable membrane (12) provided with the central hole (13).

15. A control system according to any one of the preceding claims, wherein the central hole (13) of the guide disc (10) has a smaller diameter than a diameter of the closing cap (6) of the mouth (5) of the storage container (3).

## Patentansprüche

1. System zur Steuerung der Abgabe von Kraftstoff aus einer Ausgabevorrichtung (2), insbesondere einer Tankstelle, in einen Vorratsbehälter (3), insbesondere einen Tank eines Fahrzeugs, **dadurch gekennzeichnet, dass** das Steuersystem Folgendes umfasst: Eine Muffe (8), die dazu ausgebildet ist, um eine Verschlusskappe (6) einer Öffnung (5) des Vorratsbehälters (3) herum montiert zu werden; eine Führungsscheibe (10), die ein mittiges Loch (13) aufweist, das von einem Abgabeelement (7) der Ausgabevorrichtung (2) in Eingriff genommen werden kann, und die so mit der Muffe (8) verbunden ist, dass sie sich zwischen einer ersten Stellung, in der die Führungsscheibe (10) dem Abgabeelement (7) ermöglicht, Kraftstoff durch die Öffnung (5) hindurch in den Vorratsbehälter (3) einzuspeisen, und einer zweiten Stellung, in der die Verschlusskappe (6) von der Öffnung (5) entfernbar ist, bewegt; erste Erkennungsmittel (16) zum Erkennen, ob die Führungsscheibe (10) in ihrer ersten Stellung angeordnet ist; zweite Erkennungsmittel (17) zum Erkennen, ob das Abgabeelement (7) in die Öffnung (5) eingreift oder sich von dieser löst; und Steuermittel (24), die so ausgestaltet sind, dass sie die Abgabe von Kraftstoff aus der Ausgabevorrichtung (2) in den Vorratsbehälter (3) ermöglichen, wenn die ersten Erkennungsmittel (16) erkennen, dass die Führungsscheibe (10) in der ersten Stellung angeordnet ist, und die zweiten Erkennungsmittel (17) erkennen, dass das Abgabeelement (7) in die Öffnung (5) eingreift.

2. Steuersystem nach Anspruch 1, wobei die ersten Erkennungsmittel (16) ein erstes RFID-Etikett (21), das an der Führungsscheibe (10) angebracht ist, eine erste Antenne (22), die an der Muffe (8) angebracht ist, und einen RFID-Leser (20), der mit der ersten Antenne (22) verbunden ist und so ausgestaltet ist, dass er das Vorhandensein des ersten RFID-Etiketts (21) mittels der ersten Antenne (22) erkennt und mit den Steuermitteln (24) kommuniziert, umfassen.

3. Steuersystem nach Anspruch 2, wobei die zweiten Erkennungsmittel (17) ein zweites RFID-Etikett (23), das an dem Abgabeelement (7) angebracht ist, eine zweite Antenne (19), die an der Muffe (8) angebracht ist, und den RFID-Leser (20), der so ausgestaltet ist, dass er das Vorhandensein des zweiten RFID-Etiketts (23) mittels der zweiten Antenne (19) erkennt, um zu erkennen, wann das Abgabeelement (7) in die Öffnung (5) eingreift, umfassen.

4. Steuersystem nach Anspruch 3, wobei die Steuermittel (24) so ausgestaltet sind, dass sie die Abgabe von Kraftstoff aus der Ausgabevorrichtung (2) in den Vorratsbehälter (3) ermöglichen, wenn die Zeit, die zwischen der Erkennung des ersten RFID-Etiketts (21) mittels der ersten Antenne (22) und der Erkennung des zweiten RFID-Etiketts (23) mittels der zweiten Antenne (19) vergeht, höchstens gleich einem vorgegebenen ersten Schwellenwert ist.

5. Steuersystem nach Anspruch 2, wobei die zweiten Erkennungsmittel (17) ein zweites RFID-Etikett (23), das an dem Abgabeelement (7) angebracht ist, eine zweite Antenne (19), die an der Muffe (8) angebracht ist, und den RFID-Leser (20), der so ausgestaltet ist, dass er das Vorhandensein des zweiten RFID-Etiketts (23) mittels der ersten Antenne (22) erkennt, um zu erkennen, wann sich das Abgabeelement (7) von der Öffnung (5) löst, umfassen.

6. Steuersystem nach Anspruch 5, wobei die Steuermittel (24) so ausgestaltet sind, dass sie die Abgabe von Kraftstoff aus der Ausgabevorrichtung (2) in den Vorratsbehälter (3) ermöglichen, wenn die Zeit, die zwischen der Erkennung des zweiten RFID-Etiketts (23) mittels der ersten Antenne (22) und der Erkennung des zweiten RFID-Etiketts (23) mittels der zweiten Antenne (19) vergeht, höchstens gleich einem vorgegebenen zweiten Schwellenwert ist.

7. Steuersystem nach einem beliebigen der Ansprüche 3 bis 6, und das ferner dritte Erkennungsmittel (15) umfasst, um zu erkennen, ob die Verschlusskappe (6) auf der Öffnung (5) vorhanden ist oder nicht.

8. Steuersystem nach Anspruch 7, wobei die Steuermittel (24) so ausgestaltet sind, dass sie die Abgabe von Kraftstoff aus der Ausgabevorrichtung (2) in den Vorratsbehälter (3) ermöglichen, wenn die dritten Erkennungsmittel (15) erkennen, dass die Verschlusskappe (6) nicht auf der Öffnung (5) vorhanden ist.

9. Steuersystem nach Anspruch 7 oder 8, wobei die dritten Erkennungsmittel (15) ein drittes RFID-Etikett (18), das auf der Verschlusskappe (6) angebracht ist, und den RFID-Leser (20), der so ausgestaltet ist, dass er das Vorhandensein des dritten RFID-Etiketts (18) mittels der zweiten Antenne (19) erkennt, um zu erkennen, wann die Verschlusskappe (6) auf der Öffnung (5) vorhanden ist, umfassen.

10. Steuersystem nach einem beliebigen der Ansprüche 3 bis 6, und das ferner eine Verschlussplatte (27) umfasst; wobei die Führungsscheibe (10) zwischen der Muffe (8) und der Verschlusskappe (27) angebracht ist.

11. Steuersystem nach Anspruch 10, wobei die Verschlussplatte (27) bewegbar ist zwischen einer geschlossenen Stellung, in der die Verschlussplatte (27) einen Zugang zu der Führungsscheibe (10), und somit zu dem Vorratsbehälter (3), verhindert, und einer geöffneten Stellung, in der die Verschlussplatte (27) einen Zugang zu der Führungsscheibe (10), und somit zu dem Vorratsbehälter (3), ermöglicht.

12. Steuersystem nach Anspruch 11, und das ferner ein viertes RFID-Etikett (28), das an der Verschlussplatte (27) angebracht ist, umfasst; wobei der RFID-Leser (20) so ausgestaltet ist, dass er das Vorhandensein des vierten RFID-Etiketts (28) mittels der ersten Antenne (22) erkennt, um zu erkennen, wann die Verschlussplatte (27) in ihrer geschlossenen Stellung oder in ihrer geöffneten Stellung angeordnet ist.

13. Steuersystem nach einem beliebigen der Ansprüche 2 bis 12, wobei die Steuermittel (24) eine Steuereinheit (25), die der Ausgabevorrichtung (2) zugeordnet ist, erste Drahtloskommunikationsmittel, die mit dem RFID-Leser (20) verbunden sind, und zweite Drahtloskommunikationsmittel, die mit der Steuereinheit (25) verbunden sind und dazu ausgebildet sind, mit den ersten Drahtloskommunikationsmitteln zu kommunizieren, umfasst.

14. Steuersystem nach einem beliebigen der vorhergehenden Ansprüche, wobei die Führungsscheibe (10) eine elastisch verformbare Membran (12) umfasst, die mit dem mittigen Loch (13) versehen ist.

15. Steuersystem nach einem beliebigen der vorhergehenden Ansprüche, wobei das mittige Loch (13) der Führungsscheibe (10) einen Durchmesser aufweist, der kleiner als ein Durchmesser der Verschlusskappe (6) der Öffnung (5) des Vorratsbehälters (3) ist.

## Revendications

1. Système pour commander la distribution de carburant depuis un dispositif de distribution (2), en particulier une station-service, à un contenant de stockage (3), en particulier un réservoir d'un véhicule, **caractérisé en ce que** le système de commande comprend un manchon (8) conçu pour être ajusté autour d'un bouchon de fermeture (6) d'une embouchure (5) du contenant de stockage (3) ; un disque de guidage (10), qui présente un trou central (13) capable d'être mis en prise par un élément de distribution (7) du dispositif de distribution (2), et est accouplé au manchon (8) de manière à se déplacer entre une première position, dans laquelle le disque de guidage (10) permet à l'élément de distribution (7) d'acheminer du carburant dans le contenant de stockage (3) par le biais de l'embouchure (5), et une seconde position, dans laquelle le bouchon de fermeture (6) peut être retiré de l'embouchure (5) ; un premier moyen de détection (16) pour détecter si le disque de guidage (10) est agencé dans sa première position ; un deuxième moyen de détection (17) pour détecter si l'élément de distribution (7) vient en prise avec l'embouchure (5) ou s'en désolidarise ; et un moyen de commande (24) configuré pour permettre la distribution de carburant du dispositif de distribution (2) au contenant de stockage (3) lorsque le premier moyen de détection (16) détecte que le disque de guidage (10) est agencé dans la première position et le deuxième moyen de détection (17) détecte que l'élément de distribution (7) vient en prise avec l'embouchure (5).

2. Système de commande selon la revendication 1, dans lequel le premier moyen de détection (16) comprend une première étiquette RFID (21) montée sur le disque de guidage (10), une première antenne (22) montée sur le manchon (8) et un lecteur RFID (20), qui est connecté à la première antenne (22), et est configuré pour détecter la présence de la première étiquette RFID (21) par le biais de la première antenne (22) et pour communiquer avec le moyen de commande (24).

3. Système de commande selon la revendication 2, dans lequel le deuxième moyen de détection (17) comprend une deuxième étiquette RFID (23) montée sur l'élément de distribution (7), une seconde antenne (19) montée sur le manchon (8), et ledit lecteur RFID (20), qui est configuré pour détecter la présence de la deuxième étiquette RFID (23) par le biais de la seconde antenne (19) afin de détecter le moment où l'élément de distribution (7) vient en prise avec l'embouchure (5).

4. Système de commande selon la revendication 3, dans lequel le moyen de commande (24) est configuré pour permettre la distribution de carburant du dispositif de distribution (2) au contenant de stockage (3) lorsque la quantité de temps s'écoulant entre la détection de la première étiquette RFID (21) par le biais de la première antenne (22) et la détection de la deuxième étiquette RFID (23) par le biais de la seconde antenne (19) est égale, au maximum, à une première valeur seuil donnée.

5. Système de commande selon la revendication 2, dans lequel le deuxième moyen de détection (17) comprend une deuxième étiquette RFID (23) montée sur l'élément de distribution (7), une seconde antenne (19) montée sur le manchon (8), et ledit lecteur RFID (20), qui est configuré pour détecter la présence de la deuxième étiquette RFID (23) par le biais de la première antenne (22) afin de détecter le moment où l'élément de distribution (7) se désolidarise de l'embouchure (5).

6. Système de commande selon la revendication 5, dans lequel le moyen de commande (24) est configuré pour permettre la distribution de carburant du dispositif de distribution (2) au contenant de stockage (3) lorsque la quantité de temps s'écoulant entre la détection de la deuxième étiquette RFID (23) par le biais de la première antenne (22) et la détection de la deuxième étiquette RFID (23) par le biais de la seconde antenne (19) est égale, au maximum, à une deuxième valeur seuil donnée.

7. Système de commande selon l'une quelconque des revendications 3 à 6 et comprenant en outre un troisième moyen de détection (15) pour détecter si le bouchon de fermeture (6) est présent ou non sur l'embouchure (5).

8. Système de commande selon la revendication 7, dans lequel le moyen de commande (24) est configuré pour permettre la distribution de carburant du dispositif de distribution (2) au contenant de stockage (3) lorsque le troisième moyen de détection (15) détecte que le bouchon de fermeture (6) n'est pas présent sur l'embouchure (5).

9. Système de commande selon la revendication 7 ou 8, dans lequel le troisième moyen de détection (15) comprend une troisième étiquette RFID (18) montée sur le bouchon de fermeture (6) et ledit lecteur RFID (20), qui est configuré pour détecter la présence de la troisième étiquette RFID (18) par le biais de la seconde antenne (19) afin de détecter le moment où le bouchon de fermeture (6) est présent sur l'embouchure (5).

10. Système de commande selon l'une quelconque des revendications 3 à 6 et comprenant en outre une plaque de fermeture (27) ; le disque de guidage (10) étant monté entre le manchon (8) et la plaque de fermeture (27).

11. Système de commande selon la revendication 10, dans lequel la plaque de fermeture (27) est mobile entre une position fermée, dans laquelle la plaque de fermeture (27) interdit l'accès au disque de guidage (10) et, donc, au contenant de stockage (3), et une position ouverte, dans laquelle la plaque de fermeture (27) permet l'accès au disque de guidage (10) et, donc, au contenant de stockage (3).

12. Système de commande selon la revendication 11 et comprenant en outre une quatrième étiquette RFID (28) montée sur la plaque de fermeture (27) ; le lecteur RFID (20) étant configuré pour détecter la présence de la quatrième étiquette RFID (28) par le biais de la première antenne (22) afin de détecter le moment où la plaque de fermeture (27) est agencée dans sa position fermée ou dans sa position fermée.

13. Système de commande selon l'une quelconque des revendications 2 à 12, dans lequel le moyen de commande (24) comprend une unité de commande (25) associée au dispositif de distribution (2), un premier moyen de communication sans fil connecté au lecteur RFID (20) et un second moyen de communication sans fil connecté à l'unité de commande (25) et conçu pour communiquer avec le premier moyen de communication sans fil.

14. Système de commande selon l'une quelconque des revendications précédentes, dans lequel le disque de guidage (10) comprend une membrane élastiquement déformable (12) pourvue du trou central (13).

15. Système de commande selon l'une quelconque des revendications précédentes, dans lequel le trou central (13) du disque de guidage (10) présente un diamètre plus petit qu'un diamètre du bouchon de fermeture (6) de l'embouchure (5) du contenant de stockage (3).
